# EUROPEAN PATENT SPECIFICATION

(11) **EP 4 020 287 B1**
(45) Date of publication and mention of the grant of the patent: **30.04.2025**
(21) Application number: 21198268.1
(22) Date of filing: 22.09.2021
(51) Int. Cl.: G06F 21/60, G06F 21/73, H04L 9/08, H04L 9/32

(54) **TIME-BASED MULTI-DIMENSIONAL KEY RECREATION MECHANISM USING PUF TECHNOLOGIES**
MECHANISMUS ZUR WIEDERHERSTELLUNG VON ZEITBASIERTEM MEHRDIMENSIONALEM SCHLÜSSEL UNTER VERWENDUNG VON PUF-TECHNOLOGIEN
MÉCANISME RÉCRÉATIF DE CLÉS MULTIDIMENSIONNELLES BASÉ SUR LE TEMPS UTILISANT DES TECHNOLOGIES PUF

(30) Priority: 23.12.2020 US 202017132528
(43) Date of publication of application: 29.06.2022
(73) Proprietor: INTEL Corporation, Santa Clara, CA 95054 (US)
(72) Inventor: ARENO, Matthew, Round Rock, 78665 (US)
(74) Representative: Viering, Jentschura & Partner mbB Patent- und Rechtsanwälte

(56) References cited:
- US-A1- 2019 165 956
- US-A1- 2019 312 740
- US-B1- 9 947 391

## Description

### BACKGROUND

Physically Unclonable Functions (PUPs) are emerging as attractive solutions for low-cost device authentication. PUPs harness manufacturing process variations to provide a unique device-specific response for a given input (known as challenge) to enable authentication. Existing PUF-based solutions suffer from issues relating to the inability to validate their output without potentially compromising their value or adding unnecessary logic to repeatedly and unnecessarily verify the expected entropy of the PUF output. Thus, additional PUF-based authentication techniques may find utility, e.g., in secure computing applications.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
Fig. 1 is a simplified schematic diagram of an example system including an authentication system in accordance with an embodiment.
Figs. 2A-2D is a simplified block diagrams illustrating components of an apparatus capable to implement a time-based multi-dimensional key recreation mechanism using PUF technologies, in accordance with an embodiment.
Fig. 3 is a simplified data flow diagram of at least one embodiment of a method to implement a time-based multi-dimensional key recreation mechanism using PUF technologies, in accordance with an embodiment.
Figs. 4-7 are bit sequences which illustrate aspects of a method to implement a time-based multi-dimensional key recreation mechanism using PUF technologies, in accordance with an embodiment.
Fig. 8 is a block diagram illustrating a computing architecture which may be adapted to provide a method for secure PUF-based authentication using adversarial challenge selection according to an embodiment.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

As described above, Physically Unclonable Functions (PUPs) are emerging as attractive solutions for low-cost device authentication. PUPs harness manufacturing process variations to provide a unique device-specific response for a given input (known as challenge) to enable authentication over an insecure communication channel. The use of Red Keys and Black Keys are common techniques for utilizing PUFs to generate a Key-Encryption-Key (KEK), which may be used to protect sensitive information.

In order for a PUF to be used in the creation of a cryptographic key, the output must be validated for sufficient entropy. This entropy validation occurs on-chip, as the PUF output should never be exposed externally. Entropy validation consumes valuable real estate on the chip and consumes processing time. The resulting PUF key may be used in a cryptographic operation to convert the Black Key into the Red Key, which results in an unnecessary electromagnetic emission that could leak information about the PUF key.

To address these and other issues, described herein are techniques which use a PUF to generate a pool of random bits that may be used to re-create a known good key with high entropy. The described techniques also incorporate time-based variations in the re-creation of the key in order to provide full obfuscation of data needed to re-create the key(s).

Various techniques described herein reduce concern about the entropy of a PUF generated key, while also eliminating, or at least reducing, unnecessary circuitry that would normally be used to validate the entropy of the PUF output. In addition, these techniques reduce security risks associated with a metal group key encryption key (GKEK) by only utilizing it for supply chain threat mitigation during manufacturing. Further, these techniques reduce security risk from electromagnetic emissions that could be used to extract the PUF output. Finally, these techniques reduce the need to store any key material, encrypted or otherwise, thereby reducing the value of physical attacks against the target.

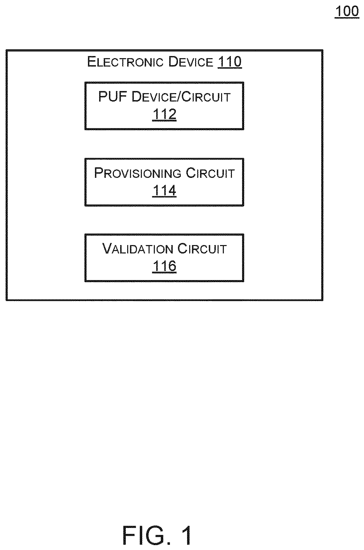

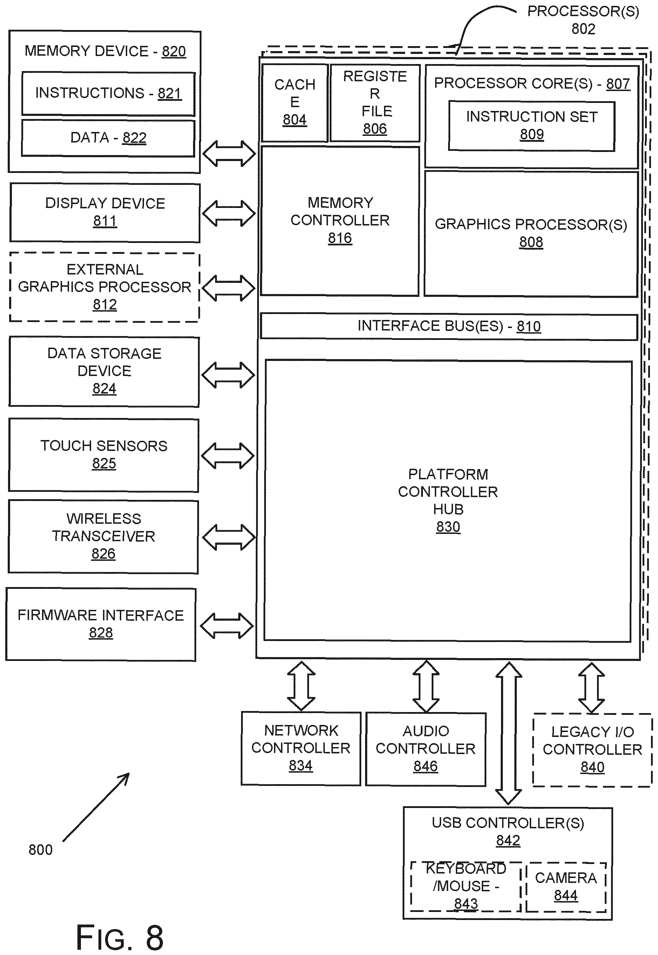

Fig. 1 is a simplified schematic diagram of an example system including an authentication system in accordance with an embodiment. Referring to Fig. 1, in some examples, system 100 comprises an electronic device 110. A detailed description of components of an electronic device 110 is provided with reference to Fig. 8, below.

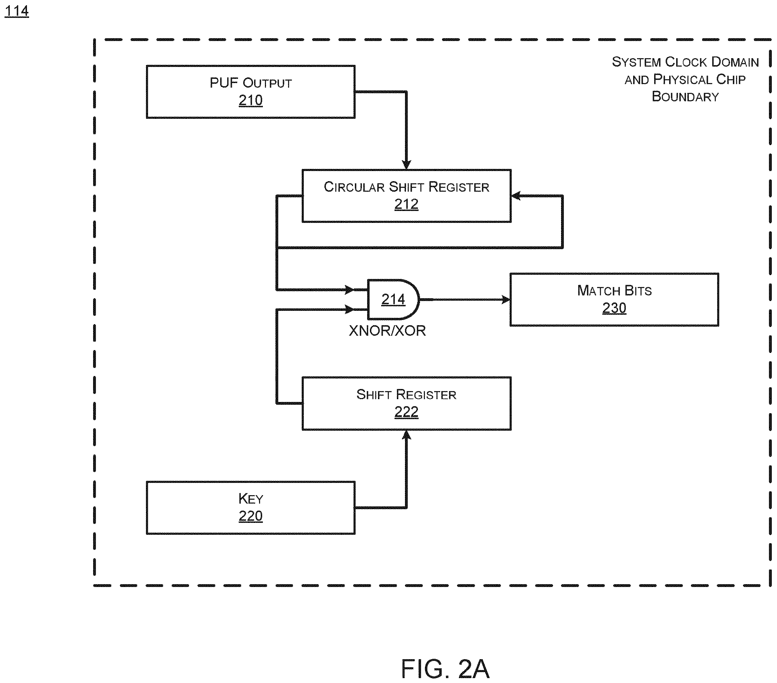

In some examples, electronic device 110 may be implemented a one or more components of a computing system. In other examples, edge device 110 may comprise an electronically activatable device such as an integrated circuit that is to be mounted on a credit card, identification card, or the like. Electronic device 110 comprises one or more physically unclonable functions (PUPs) such as a PUF circuit 112, a provisioning circuit 114, and a validation circuit 116. In some examples, PUF device/circuit 112 may be constructed using delay chains, SRAM bitcells, or cross-coupled inverters as an entropy source. Various embodiments of a provisioning circuit 114 and a validation circuit 116 are described with reference to Figs. 2A-2D, below.

Figs. 2A-2D is a simplified block diagrams illustrating components of an apparatus capable to implement a time-based multi-dimensional key recreation mechanism using PUF technologies, in accordance with an embodiment. Fig. 2A is a schematic illustration of an embodiment of a provisioning circuit 114. Referring to Fig. 2A, in some examples, provisioning circuit 114 receives a PUF output from a PUF circuit 112 and packs the PUF output into a circular shift register 212. Provisioning circuit 114 further receives an encryption key (e.g., a red key) that is packed into a shift register 222. Provisioning circuit 114 comprises at least one of an exclusive NOR (XNOR) or an exclusive OR gate 214 that operates on the contents of the circular shift register 212 and the shift register 222 to generate a series of match bits 230. In the embodiment depicted in Fig. 2A all components reside within the same system clock domain and physical chip boundary.

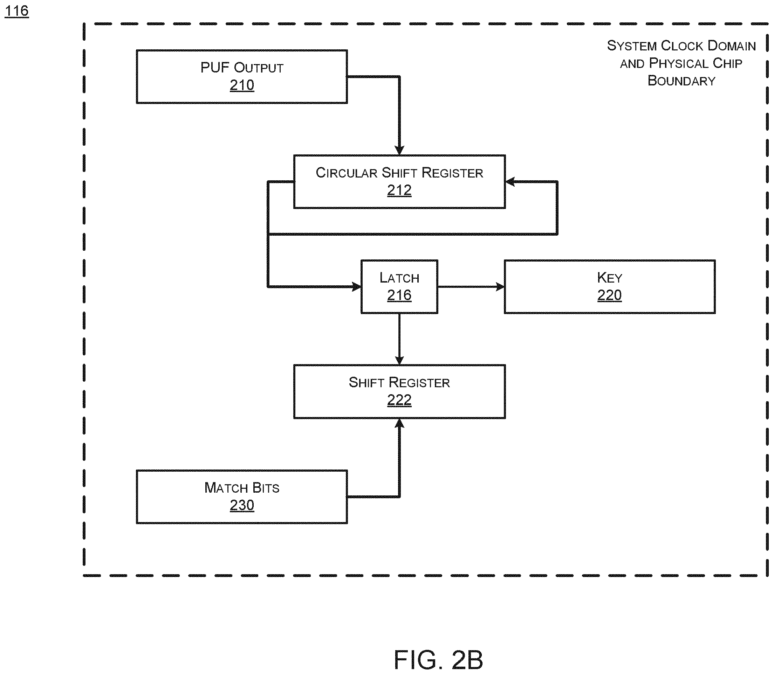

Fig. 2B is a schematic illustration of an embodiment of a validation circuit 116. Referring to Fig. 2B, in some examples, validation circuit 114 receives a PUF output from a PUF circuit 112 and packs the PUF output into a circular shift register 212. Validation circuit 114 further receives the match bits 230 that are packed into a shift register 222. Provisioning circuit 114 comprises a latch 216 that operates on the contents of the circular shift register 212 and the shift register 222 to generate an encryption key 220 (e.g., a red key). In the embodiment depicted in Fig. 2B all components reside within the same system clock domain and physical chip boundary.

Rather than using the output of the PUF device as a seed to a key derivation function (KDF), the output of the PUF device is instead used as a pool of random bits from which a pre-generated key with known good entropy can simply be recreated. It is also possible to use the PUF output to seed a RNG. In one example, the provisioning circuit 114 a provisioning stage performs a not-exclusive-or of the PUF output with the encryption key, one bit at a time (i.e., a bitwise comparison). This operation identifies matches between the two bitstreams resulting in a sequence of match bits 230. Both the PUF output 210 and the encryption key 220 have their own effective index for iteration, with the index for the PUF output 210 incrementing on every comparison and the index for the encryption key 220 incrementing on every match.

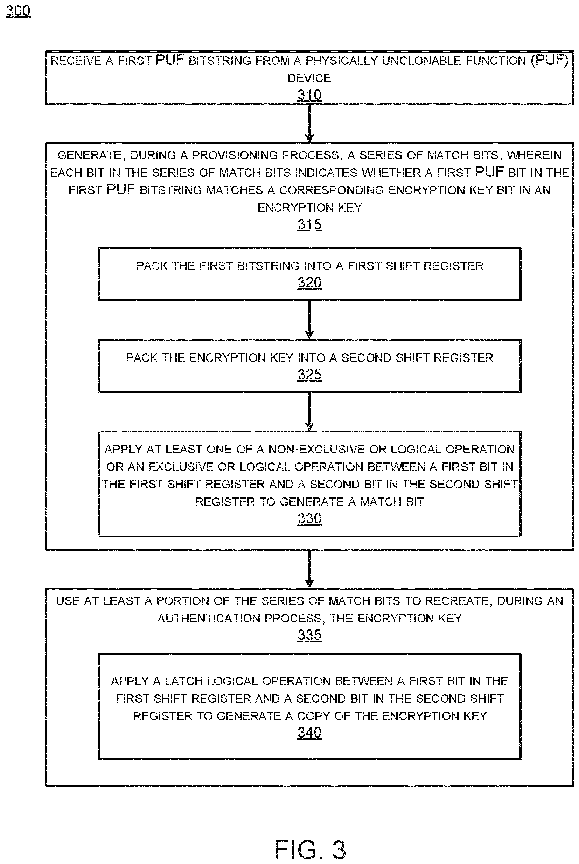

Fig. 3 is a simplified data flow diagram of at least one embodiment of a method 300 to implement a time-based multi-dimensional key recreation mechanism using PUF technologies, in accordance with an embodiment. Operation of the provisioning circuit 114 and the validation circuit 116 will be described with reference to Fig. 3. Referring to Fig. 3, at operation 310 the provisioning circuit receives a first PUF bitstring from a physically unclonable function (PUF) device, e.g., PUF device/circuit 112.

At operation 315 the provisioning circuit 114 generates, during the provisioning process, a series of match bits, wherein each bit in the series of match bits indicates whether a first PUF bit in the first PUF bitstring matches a corresponding encryption key bit in an encryption key. In some examples operation 315 may include operation 320 in which the provisioning circuit 114 packs the first PUF bitstring into a circular shift register 212. In some examples operation 315 may include operation 325 in which the provisioning circuit 114 packs the encryption key 220 into a second shift register 222. In some examples operation 315 may include operation 330 in which the provisioning circuit 114 applies at least one of a non-exclusive or logical operation or an exclusive or logical operation between a first bit in the first shift register and a second bit in the second shift register to generate a match bit. Operation 330 may be repeated until a bitwise comparison of the contents of the first shift register 212 and the second shift register 222 is complete, thereby forming a series of match bits 230.

The process for recreating the authentication key solution only requires latching in the right bits of the PUF output 210 as those bits are cycled through a shift register. For example, a bit value of '1' in the match bits 230 indicates that the corresponding bit in the PUF output should be used as part of the encryption key, whereas a bit value of '0' says the bit should be ignored. The match bits 230 created previously the control the enable signal of a latch and serves to identify the correct bits for recreating the encryption key 220.

Thus, referring to Fig. 3, at operation 335 the validation circuit 116 uses at least a portion of the series of match bits to recreate, during an authentication process, the encryption key. In some examples operation 335 may include operation 340 in which the validation circuit 116 applies a latch logical operation between a first bit in the first shift register and a second bit in the second shift register to generate a copy of the encryption key. Operation 340 may be repeated until a bitwise comparison of the contents of the first shift register 212 and the second shift register 220 is complete, thereby recreating the encryption key 220.

To illustrate how the operations occur and the match bits 230 are created, an example is provided in Table 1 and Table 2. Table 1 shows a provisioning stage for an example case where the match bits 230 are identified based on a trivial encryption key 220 and PUF Output 210.

**Table 1 - Example Provisioning**

| | | |
|---|---|---|
| Initial State: | PUF Output: | 10101010 |
| | Red Key: | 1100 |
| | Match Bits: | xxxxxxxx |
| Step One: | PUF Output: | [1]0101010 |
| | Red Key: | [1]100 |
| | Match Bits: | 1xxxxxxx |
| Step Two: | PUF Output: | 1[0]101010 |
| | Red Key: | 1[1]00 |
| | Match Bits: | 10xxxxxx |
| Step Three: | PUF Output: | 10[1]01010 |
| | Red Key: | 1[1]00 |
| | Match Bits: | 101xxxxx |
| Step Four: | PUF Output: | 101[0]1010 |
| | Red Key: | 11[0]0 |
| | Match Bits: | 1011xxxx |
| Step Five: | PUF Output: | 1010[1]010 |
| | Red Key: | 110[0] |
| | Match Bits: | 10110xxx |
| Step Six: | PUF Output: | 10101[0]10 |
| | Red Key: | 110[0] |
| | Match Bits: | 101101xx |
| Step Six: | PUF Output: | 101010[1]0 |
| | Red Key: | 1100[] |
| | Match Bits: | 1011010x |
| Step Six: | PUF Output: | 1010101[0] |
| | Red Key: | 1100[] |
| | Match Bits: | 10110100 |

Reproduction of the example Red Key is shown in Table 2

**Table 2 - Example Key Re-creation**

| | | |
|---|---|---|
| Initial State: | PUF Output: | 10101010 |
| | Match Bits: | 10110100 |
| | Red Kev: | xxxxxxxx |
| Step One: | PUF Output: | [1]0101010 |
| | Match Bits: | [1]0110100 |
| | Red Key: | 1xxxxxxx |
| Step Two: | PUF Output: | 1[0]101010 |
| | Match Bits: | 1[0]110100 |
| | Red Key: | 1xxxxxxx |
| Step Three: | PUF Output: | 10[1]01010 |
| | Match Bits: | 10[1]10100 |
| | Red Key: | 11xxxxxx |
| Step Four: | PUF Output: | 101[0]1010 |
| | Match Bits: | 101[1]0100 |
| | Red Key: | 110xxxxx |
| Step Five: | PUF Output: | 1010[1]010 |
| | Match Bits: | 1011[0]100 |
| | Red Kev: | 110xxxxx |
| Step Six: | PUF Output: | 10101[0]10 |
| | Match Bits: | 10110[1]00 |
| | Red Key: | 1100xxxx |
| Step Six: | PUF Output: | 101010[1]0 |
| | Match Bits: | 101101[0]0 |
| | Red Key: | 1100xxxx |
| Step Six: | PUF Output: | 1010101[0] |
| | Match Bits: | 1011010[0] |
| | Red Key: | 1100xxxx |

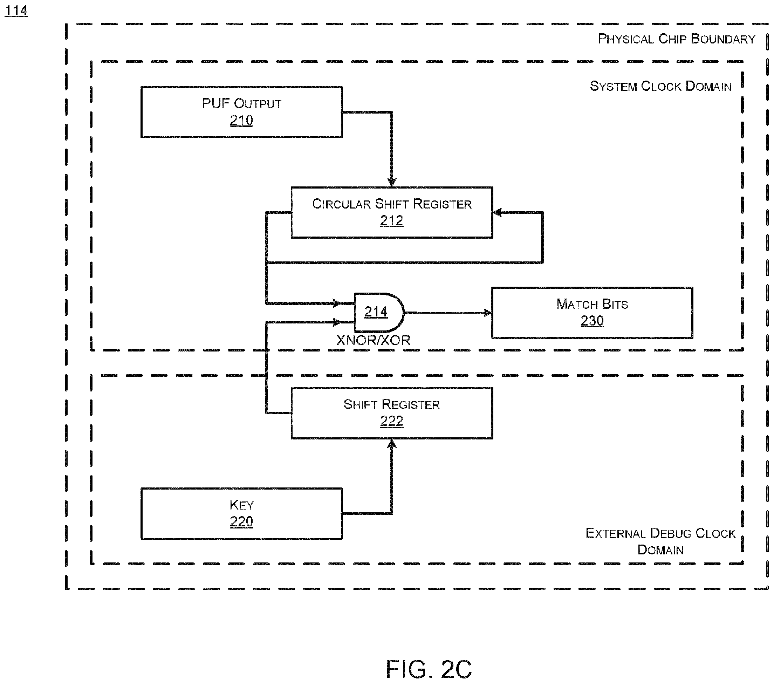

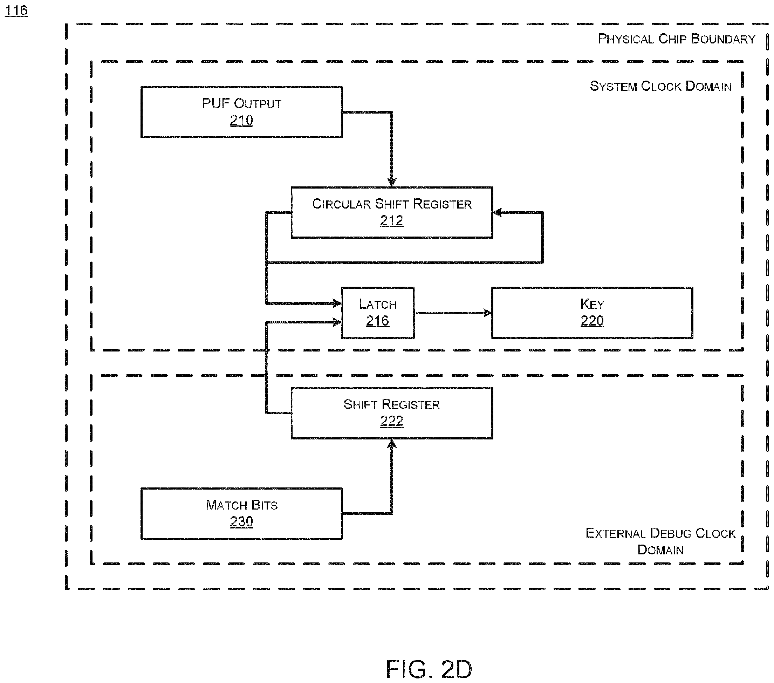

To prevent unintentional leakage of bit transitions in the PUF output 210 in some examples, a time-based multi-dimensional solution is implemented as illustrated in Fig. 2C and Fig. 2D. Fig. 2C is a schematic illustration of an embodiment of a provisioning circuit 114 similar to the circuit described with reference to Fig. 2A. Referring to Fig. 2C, in some examples, provisioning circuit 114 receives a PUF output from a PUF circuit 112 and packs the PUF output into a circular shift register 212. Provisioning circuit 114 further receives an encryption key (e.g., a red key) that is packed into a shift register 222. Provisioning circuit 114 comprises at least one of an exclusive NOR (XNOR) or an exclusive OR gate 214 that operates on the contents of the circular shift register 212 and the shift register 222 to generate a series of match bits 230.

In the embodiment depicted in Fig. 2C, the circular shift register 212 and the at least one of an exclusive NOR (XNOR) or an exclusive OR gate 214 operate according to a system clock domain generated on-chip and the encryption key 220 and shift register 222 operate according to an external debug clock domain input by an external user via a pin on the processor (although this second domain could be created on chip as well). The circular shift register 212 for the PUF output 210 operates as described previously. The shift register 222 for the encryption key 220 still increments when a match is found, but the frequency at which it performs the comparison is under the control of a separate clock domain. This results in the ability to perform non-sequential and non-linear comparisons between the two shift registers, resulting in effective delays.

For example, if the encryption key shift register 222 is being clocked at 50MHz while the circular shift register 212 for the PUF Output is being clocked at 100MHz, the result would be that the not-exclusive-or would compare the encryption key bits with every other PUF output bit, as opposed to comparing them sequentially. The respective clock rates can be static or completely dynamic to adjust the delay rates between the domains. As long as the initial provisioner or internal hardware is able to recreate the proper sequence, virtually any sequence of delays will work.

The validation circuit can be similarly divided into separate clock domains. Fig. 2D is a schematic illustration of an embodiment of a validation circuit 116. Referring to Fig. 2D, in some examples, validation circuit 114 receives a PUF output from a PUF circuit 112 and packs the PUF output into a circular shift register 212. Validation circuit 116 further receives the match bits 230 generated by provisioning circuit 230 that are packed into a shift register 222. Provisioning circuit 114 comprises a latch 216 that operates on the contents of the circular shift register 212 and the shift register 222 to generate an encryption key 220 (e.g., a red key).

In the embodiment depicted in Fig. 2D, the circular shift register 212 and the latch 216 operate according to a system clock domain generated on-chip and the encryption key 220 and shift register 222 operate according to an external debug clock domain input by an external user via a pin on the processor (although this second domain could be created on chip as well).

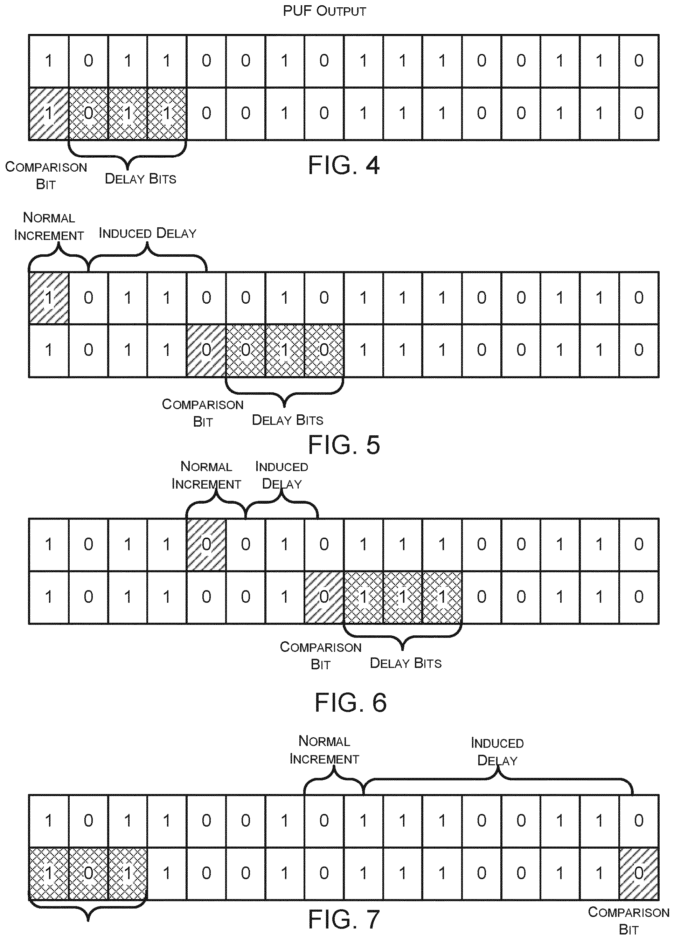

In another example a variable delay may be introduced by skipping bit in a programmatic manner when reading the PUF output 210. For example, the PUF output 210 could be read four bits at a time, but only the first bit is used for comparison with a bit in the encryption key 220. The remaining three bits provide a random value to a counter resulting in the PUF output shift register 212 that causes the register to advance anywhere from 1-8 places while the encryption key register 222 only progresses 1 bit. This is illustrated in the bit sequence depicted in Figs. 4-7. The first bit in this sequence, '1', represents the bit for comparison with a bit from the encryption key 220. The next three bits, '011', represent the number of random cycles of delay to introduce.

Rather than moving forward one space in a linear fashion for the next comparison bit, the proposed solution progresses 1 + n steps, where n is the random 3-bit value represented by the binary value of the delay bits. In this case, the solution will move forward 1+3 (i.e., binary 011) steps to find the next comparison bit, as shown in Fig. 5. In Fig. 5 the value of the comparison bit is '0' and added delay of '010'. The next comparison bit will then be 1+2 positions forward, as shown in Fig. 6. In Fig. 6 the value of the comparison bit is '0' a delay value of '111' (i.e., 8). The subsequent progression is shown in Fig. 7.

In the example depicted in Fig. 7, the comparison bit is the final bit in the string, '0', and the delay bits wrap around to the beginning of the bitstring, i.e., the binary string '101'. This cycle can continue until all needed comparisons are completed. The example above used a 3-bit delay window, although there are no physical or logical constraints on the window size, other than what might be imposed by adopting requirements.

### Exemplary Computing Architecture

Fig. 8 is a block diagram illustrating a computing architecture which may be adapted to implement a secure address translation service using a permission table (e.g., HPT 135 or HPT 260) and based on a context of a requesting device in accordance with some examples. The embodiments may include a computing architecture supporting one or more of (i) verification of access permissions for a translated request prior to allowing a memory operation to proceed; (ii) prefetching of page permission entries of an HPT responsive to a translation request; and (iii) facilitating dynamic building of the HPT page permissions by system software as described above.

In various embodiments, the computing architecture 800 may comprise or be implemented as part of an electronic device. In some embodiments, the computing architecture 800 may be representative, for example, of a computer system that implements one or more components of the operating environments described above. In some embodiments, computing architecture 800 may be representative of one or more portions or components in support of a secure address translation service that implements one or more techniques described herein.

As used in this application, the terms "system" and "component" and "module" are intended to refer to a computer-related entity, either hardware, a combination of hardware and software, software, or software in execution, examples of which are provided by the exemplary computing architecture 800. For example, a component can be, but is not limited to being, a process running on a processor, a processor, a hard disk drive or solid state drive (SSD), multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 800 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 800.

As shown in Fig. 8, the computing architecture 800 includes one or more processors 802 and one or more graphics processors 808, and may be a single processor desktop system, a multiprocessor workstation system, or a server system having a large number of processors 802 or processor cores 807. In on embodiment, the system 800 is a processing platform incorporated within a system-on-a-chip (SoC or SOC) integrated circuit for use in mobile, handheld, or embedded devices.

An embodiment of system 800 can include, or be incorporated within, a server-based gaming platform, a game console, including a game and media console, a mobile gaming console, a handheld game console, or an online game console. In some embodiments system 800 is a mobile phone, smart phone, tablet computing device or mobile Internet device. Data processing system 800 can also include, couple with, or be integrated within a wearable device, such as a smart watch wearable device, smart eyewear device, augmented reality device, or virtual reality device. In some embodiments, data processing system 800 is a television or set top box device having one or more processors 802 and a graphical interface generated by one or more graphics processors 808.

In some embodiments, the one or more processors 802 each include one or more processor cores 807 to process instructions which, when executed, perform operations for system and user software. In some embodiments, each of the one or more processor cores 807 is configured to process a specific instruction set 814. In some embodiments, instruction set 809 may facilitate Complex Instruction Set Computing (CISC), Reduced Instruction Set Computing (RISC), or computing via a Very Long Instruction Word (VLIW). Multiple processor cores 807 may each process a different instruction set 809, which may include instructions to facilitate the emulation of other instruction sets. Processor core 807 may also include other processing devices, such a Digital Signal Processor (DSP).

In some embodiments, the processor 802 includes cache memory 804. Depending on the architecture, the processor 802 can have a single internal cache or multiple levels of internal cache. In some embodiments, the cache memory is shared among various components of the processor 802. In some embodiments, the processor 802 also uses an external cache (e.g., a Level-3 (L3) cache or Last Level Cache (LLC)) (not shown), which may be shared among processor cores 807 using known cache coherency techniques. A register file 806 is additionally included in processor 802 which may include different types of registers for storing different types of data (e.g., integer registers, floating point registers, status registers, and an instruction pointer register). Some registers may be general-purpose registers, while other registers may be specific to the design of the processor 802.

In some embodiments, one or more processor(s) 802 are coupled with one or more interface bus(es) 810 to transmit communication signals such as address, data, or control signals between processor 802 and other components in the system. The interface bus 810, in one embodiment, can be a processor bus, such as a version of the Direct Media Interface (DMI) bus. However, processor buses are not limited to the DMI bus, and may include one or more Peripheral Component Interconnect buses (e.g., PCI, PCI Express), memory buses, or other types of interface buses. In one embodiment the processor(s) 802 include an integrated memory controller 816 and a platform controller hub 830. The memory controller 816 facilitates communication between a memory device and other components of the system 800, while the platform controller hub (PCH) 830 provides connections to I/O devices via a local I/O bus.

Memory device 820 can be a dynamic random-access memory (DRAM) device, a static random-access memory (SRAM) device, flash memory device, phase-change memory device, or some other memory device having suitable performance to serve as process memory. In one embodiment the memory device 820 can operate as system memory for the system 800, to store data 822 and instructions 821 for use when the one or more processors 802 execute an application or process. Memory controller hub 816 also couples with an optional external graphics processor 812, which may communicate with the one or more graphics processors 808 in processors 802 to perform graphics and media operations. In some embodiments a display device 811 can connect to the processor(s) 802. The display device 811 can be one or more of an internal display device, as in a mobile electronic device or a laptop device or an external display device attached via a display interface (e.g., DisplayPort, etc.). In one embodiment the display device 811 can be a head mounted display (HMD) such as a stereoscopic display device for use in virtual reality (VR) applications or augmented reality (AR) applications.

In some embodiments the platform controller hub 830 enables peripherals to connect to memory device 820 and processor 802 via a high-speed I/O bus. The I/O peripherals include, but are not limited to, an audio controller 846, a network controller 834, a firmware interface 828, a wireless transceiver 826, touch sensors 825, a data storage device 824 (e.g., hard disk drive, flash memory, etc.). The data storage device 824 can connect via a storage interface (e.g., SATA) or via a peripheral bus, such as a Peripheral Component Interconnect bus (e.g., PCI, PCI Express). The touch sensors 825 can include touch screen sensors, pressure sensors, or fingerprint sensors. The wireless transceiver 826 can be a Wi-Fi transceiver, a Bluetooth transceiver, or a mobile network transceiver such as a 3G, 4G, Long Term Evolution (LTE), or 5G transceiver. The firmware interface 828 enables communication with system firmware, and can be, for example, a unified extensible firmware interface (UEFI). The network controller 834 can enable a network connection to a wired network. In some embodiments, a high-performance network controller (not shown) couples with the interface bus 810. The audio controller 846, in one embodiment, is a multi-channel high definition audio controller. In one embodiment the system 800 includes an optional legacy I/O controller 840 for coupling legacy (e.g., Personal System 2 (PS/2)) devices to the system. The platform controller hub 830 can also connect to one or more Universal Serial Bus (USB) controllers 842 connect input devices, such as keyboard and mouse 843 combinations, a camera 844, or other USB input devices.

In the description above, for the purposes of explanation, numerous specific details are set forth in order to provide a thorough understanding of the described embodiments. It will be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their most basic form, but processes can be added to or deleted from any of the methods and information can be added or subtracted from any of the described messages without departing from the basic scope of the present embodiments. It will be apparent to those skilled in the art that many further modifications and adaptations can be made. The particular embodiments are not provided to limit the concept but to illustrate it. The scope of the embodiments is not to be determined by the specific examples provided above but only by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments requires more features than are expressly recited in each claim. Rather, as the following claims reflect, novel aspects lie in less than all features of a single foregoing disclosed embodiment. Thus, the claims are hereby expressly incorporated into this description, with each claim standing on its own as a separate embodiment. The invention is defined in independent claims 1 and 7. Preferred embodiments are defined in the dependent claims.

## Claims

1. A method (300) comprising:
receiving (310) a first PUF bitstring (210) from a physically unclonable function (PUF) device (112);
generating (315), during a provisioning process, a series of match bits (230), wherein each bit in the series of match bits indicates whether a PUF bit in the first PUF bitstring matches a corresponding encryption key bit in a pre-generated encryption key (220); and
using (335) said first PUF bitstring and at least a portion of the series of match bits to recreate, during an authentication process, said pre-generated encryption key.

2. The method (300) of claim 1, further comprising, during the provisioning process:
packing (320) the first PUF bitstring (210) into a first shift register (212);
packing (325) the pre-generated encryption key (220) into a second shift register (222); and
comparing a first bit in the first shift register and a second bit in the second shift register to generate a match bit.

3. The method (300) of claim 2, further comprising:
applying (330) at least one of an exclusive NOR logical operation (214) or an exclusive OR logical operation (214) between a first bit in the first shift register (212) and a second bit in the second shift register (222) to generate a match bit.

4. The method (300) of any one of claims 2-3, further comprising:
operating the first shift register (212) at a first clock rate; and
operating the second shift register (222) at a second clock rate, different than the first clock rate.

5. The method (300) of any one of claims 2-4, further comprising:
selecting, from the first shift register (212), the first bit for comparison to the second bit; and
calculating, from at least one subsequent bit in the first bitstring (210), a number of bits in the first bitstring to skip before comparing a second bit in the first shift register for comparison to a second bit in the second shift register (222).

6. The method (300) of any one of claims 2-5, further comprising, during the authentication process:
applying (340) a latch logical operation between a first bit in the first shift register (212) and a second bit in the second shift register (222) to generate a copy of the encryption key (220).

7. An apparatus (110, 800) comprising:
a processor (802); and
a computer readable memory (820) comprising instructions (821) which, when executed by the processor, cause the processor to:
receive (310) a first PUF bitstring (210) from a physically unclonable function (PUF) device (112);
generate (315), during a provisioning process, a series of match bits (230),
wherein each bit in the series of match bits indicates whether a PUF bit in the first PUF bitstring matches a corresponding encryption key bit in a pre-generated encryption key (220); and
use (335) said first bitstring and at least a portion of the series of match bits to recreate, during an authentication process, said pre-generated encryption key.

8. The apparatus (110, 800) of claim 7, the computer readable memory (820) comprising instructions (821) which, when executed by the processor (802), cause the processor to:
pack (320) the first PUF bitstring (210) into a first shift register (212);
pack (325) the pre-generated encryption key (220) into a second shift register (222); and
compare a first bit in the first shift register and a second bit in the second shift register to generate a match bit.

9. The apparatus (110, 800) of claim 8, the computer readable memory (820) comprising instructions (821) which, when executed by the processor (802), cause the processor to:
apply (330) at least one of an exclusive NOR logical operation (214) or an exclusive OR logical operation (214) between a first bit in the first shift register (212) and a second bit in the second shift register (222) to generate a match bit.

10. The apparatus (110, 800) of any one of claims 8-9, the computer readable memory (820) comprising instructions (821) which, when executed by the processor (802), cause the processor to:
operate the first shift register (212) at a first clock rate; and
operate the second shift register (222) at a second clock rate, different than the first clock rate.

11. The apparatus (110, 800) of any one of claims 8-10, the computer readable memory (820) comprising instructions (821) which, when executed by the processor (802), cause the processor to:
select, from the first shift register (212), the first bit for comparison to the second bit; and
calculate, from at least one subsequent bit in the first bitstring (210), a number of bits in the first bitstring to skip before comparing a second bit in the first shift register for comparison to a second bit in the second shift register (222).

12. The apparatus (110, 800) of any one of claims 8-11, the computer readable memory (820) comprising instructions (821) which, when executed by the processor (802), cause the processor to:
apply (340) a latch logical operation between a first bit in the first shift register (212) and a second bit in the second shift register (222) to generate a copy of the encryption key (220).

## Patentansprüche

1. Verfahren (300), umfassend:
Empfangen (310) eines ersten PUF-Bitstrings (210) von einer PUF(Physical unclonable function)-Vorrichtung (112);
Erzeugen (315), während eines Provisionierungsvorgangs, einer Reihe von Match-Bits (230), wobei jedes Bit in der Reihe von Match-Bits angibt, ob ein PUF-Bit in dem ersten PUF-Bitstring einem entsprechenden Verschlüsselungsschlüsselbit in einem zuvor generierten Verschlüsselungsschlüssel (220) entspricht; und
Verwenden (335) des ersten PUF-Bitstrings und mindestens eines Abschnitts der Reihe von Match-Bits zum Wiederherstellen des zuvor generierten Verschlüsselungsschlüssels während eines Authentifizierungsvorgangs.

2. Verfahren (300) nach Anspruch 1, ferner umfassend, während des Provisionierungsvorgangs:
Packen (320) des ersten PUF-Bitstrings (210) in ein erstes Schieberegister (212);
Packen (325) des zuvor generierten Verschlüsselungsschlüssels (220) in ein zweites Schieberegister (222); und
Vergleichen eines ersten Bits in dem ersten Schieberegister und eines zweiten Bits in dem zweiten Schieberegister, um ein Match-Bit zu erzeugen.

3. Verfahren (300) nach Anspruch 2, ferner umfassend:
Anwenden (330) von mindestens einem aus einer logischen Exklusiv-NICHT-ODER-Verknüpfung (214) und einer logischen Exklusiv-ODER-Verknüpfung (214) zwischen einem ersten Bit in dem ersten Schieberegister (212) und einem zweiten Bit in dem zweiten Schieberegister (222), um ein Match-Bit zu erzeugen.

4. Verfahren (300) nach einem der Ansprüche 2-3, ferner umfassend:
Betreiben des ersten Schieberegisters (212) mit einer ersten Taktrate; und
Betreiben des zweiten Schieberegisters (222) mit einer von der ersten Taktrate verschiedenen zweiten Taktrate.

5. Verfahren (300) nach einem der Ansprüche 2-4, ferner umfassend:
Auswählen, aus dem ersten Schieberegister (212), des ersten Bits zum Vergleichen mit dem zweiten Bit; und
Berechnen, aus dem mindestens einen nachfolgenden Bit in dem ersten Bitstring (210), einer Anzahl von Bits, die in dem ersten Bitstring zu überspringen sind, bevor ein zweites Bit in dem ersten Schieberegister verglichen wird, um so ein zweites Bit in dem zweiten Schieberegister (222) zu vergleichen.

6. Verfahren (300) nach einem der Ansprüche 2-5, ferner umfassend, während des Authentifizierungsvorgangs:
Anwenden (340) einer Flipflop-Logikoperation zwischen einem ersten Bit in dem ersten Schieberegister (212) und einem zweiten Bit in dem zweiten Schieberegister (222), um eine Kopie des Verschlüsselungsschlüssels (220) zu erzeugen.

7. Einrichtung (110, 800), umfassend:
einen Prozessor (802); und
einen computerlesbaren Speicher (820), umfassend Anweisungen (821), die, wenn durch den Prozessor ausgeführt, den Prozessor veranlassen zum:
Empfangen (310) eines ersten PUF-Bitstrings (210) von einer PUF(Physical unclonable function)-Vorrichtung (112);
Erzeugen (315), während eines Provisionierungsvorgangs, einer Reihe von Match-Bits (230), wobei jedes Bit in der Reihe von Match-Bits angibt, ob ein PUF-Bit in dem ersten PUF-Bitstring einem entsprechenden Verschlüsselungsschlüsselbit in einem zuvor generierten Verschlüsselungsschlüssel (220) entspricht; und
Verwenden (335) des ersten Bitstrings und mindestens eines Abschnitts der Reihe von Match-Bits zum Wiederherstellen des zuvor generierten Verschlüsselungsschlüssels während eines Authentifizierungsvorgangs.

8. Einrichtung (110, 800) nach Anspruch 7, wobei der computerlesbare Speicher (820) Anweisungen (821) umfasst, die bei Ausführung durch den Prozessor (802) den Prozessor veranlassen zum:
Packen (320) des ersten PUF-Bitstrings (210) in ein erstes Schieberegister (212);
Packen (325) des zuvor generierten Verschlüsselungsschlüssels (220) in ein zweites Schieberegister (222); und
Vergleichen eines ersten Bits in dem ersten Schieberegister und eines zweiten Bits in dem zweiten Schieberegister, um ein Match-Bit zu erzeugen.

9. Einrichtung (110, 800) nach Anspruch 8, wobei der computerlesbare Speicher (820) Anweisungen (821) umfasst, die bei Ausführung durch den Prozessor (802) den Prozessor veranlassen zum:
Anwenden (330) von mindestens einem aus einer logischen Exklusiv-NICHT-ODER-Verknüpfung (214) und einer logischen Exklusiv-ODER-Verknüpfung (214) zwischen einem ersten Bit in dem ersten Schieberegister (212) und einem zweiten Bit in dem zweiten Schieberegister (222), um ein Match-Bit zu erzeugen.

10. Einrichtung (110, 800) nach einem der Ansprüche 8-9, wobei der computerlesbare Speicher (820) Anweisungen (821) umfasst, die bei Ausführung durch den Prozessor (802) den Prozessor veranlassen zum:
Betreiben des ersten Schieberegisters (212) mit einer ersten Taktrate; und
Betreiben des zweiten Schieberegisters (222) mit einer von der ersten Taktrate verschiedenen zweiten Taktrate.

11. Einrichtung (110, 800) nach einem der Ansprüche 8-10, wobei der computerlesbare Speicher (820) Anweisungen (821) umfasst, die bei Ausführung durch den Prozessor (802) den Prozessor veranlassen zum:
Auswählen, aus dem ersten Schieberegister (212), des ersten Bits zum Vergleichen mit dem zweiten Bit; und
Berechnen, aus dem mindestens einen nachfolgenden Bit in dem ersten Bitstring (210), einer Anzahl von Bits, die in dem ersten Bitstring zu überspringen sind, bevor ein zweites Bit in dem ersten Schieberegister verglichen wird, um so ein zweites Bit in dem zweiten Schieberegister (222) zu vergleichen.

12. Einrichtung (110, 800) nach einem der Ansprüche 8-11, wobei der computerlesbare Speicher (820) Anweisungen (821) umfasst, die bei Ausführung durch den Prozessor (802) den Prozessor veranlassen zum:
Anwenden (340) einer Flipflop-Logikoperation zwischen einem ersten Bit in dem ersten Schieberegister (212) und einem zweiten Bit in dem zweiten Schieberegister (222), um eine Kopie des Verschlüsselungsschlüssels (220) zu erzeugen.

## Revendications

1. Procédé (300) comprenant :
la réception (310) d'une première chaîne de bits PUF (210) provenant d'un dispositif à fonction physiquement non clonable (PUF) (112) ;
la génération (315), au cours d'un processus d'approvisionnement, d'une série de bits de correspondance (230), chaque bit de la série de bits de correspondance indiquant si un bit PUF dans la première chaîne de bits PUF correspond à un bit de clé de chiffrement correspondant dans une clé de chiffrement pré-générée (220) ; et
l'utilisation (335) de ladite première chaîne de bits PUF et d'au moins une partie de la série de bits de correspondance pour recréer, au cours d'un processus d'authentification, ladite clé de chiffrement pré-générée.

2. Procédé (300) selon la revendication 1, comprenant en outre, au cours du processus d'approvisionnement :
le placement (320) de la première chaîne de bits PUF (210) dans un premier registre à décalage (212) ;
le placement (325) de la clé de chiffrement pré-générée (220) dans un second registre à décalage (222) ; et
la comparaison d'un premier bit dans le premier registre à décalage et d'un second bit dans le second registre à décalage pour générer un bit de correspondance.

3. Procédé (300) selon la revendication 2, comprenant en outre l'étape suivante :
l'application (330) d'au moins l'une d'une opération logique NOR exclusive (214) ou d'une opération logique OU exclusive (214) entre un premier bit dans le premier registre à décalage (212) et un second bit dans le second registre à décalage (222) pour générer un bit de correspondance.

4. Procédé (300) selon l'une quelconque des revendications 2 et 3, comprenant en outre :
le fonctionnement du premier registre à décalage (212) à une première fréquence d'horloge ; et
le fonctionnement du second registre à décalage (222) à une seconde fréquence d'horloge, différente de la première fréquence d'horloge.

5. Procédé (300) selon l'une quelconque des revendications 2 à 4, comprenant en outre :
la sélection, dans le premier registre à décalage (212), du premier bit à comparer au second bit ; et
le calcul, à partir d'au moins un bit suivant dans la première chaîne de bits (210), d'un nombre de bits dans la première chaîne de bits à sauter avant de comparer un second bit dans le premier registre à décalage à un second bit dans le second registre à décalage (222).

6. Procédé (300) selon l'une quelconque des revendications 2 à 5, comprenant en outre, au cours du processus d'authentification :
l'application (340) d'une opération logique de verrouillage entre un premier bit du premier registre à décalage (212) et un second bit du second registre à décalage (222) pour générer une copie de la clé de chiffrement (220).

7. Appareil (110, 800), comprenant :
un processeur (802) ; et
une mémoire lisible par ordinateur (820) comprenant des instructions (821) qui, lorsqu'elles sont exécutées par le processeur, amènent ce dernier à :
recevoir (310) une première chaîne de bits PUF (210) provenant d'un dispositif de fonction physiquement non clonable (PUT) (112) ;
générer (315), au cours d'un processus d'approvisionnement, une série de bits de correspondance (230), chaque bit de la série de bits de correspondance indiquant si un bit PUF dans la première chaîne de bits PUF correspond à un bit de clé de chiffrement correspondant dans une clé de chiffrement pré-générée (220) ; et
utiliser (335) ladite première chaîne de bits et au moins une partie de la série de bits de correspondance pour recréer, au cours d'un processus d'authentification, ladite clé de chiffrement pré-générée.

8. Appareil (110, 800) selon la revendication 7, la mémoire lisible par ordinateur (820) comprenant des instructions (821) qui, lorsqu'elles sont exécutées par le processeur (802), amènent le processeur à :
placer (320) la première chaîne de bits PUF (210) dans un premier registre à décalage (212) ;
placer (325) la clé de chiffrement pré-générée (220) dans un second registre à décalage (222) ; et
comparer un premier bit dans le premier registre à décalage et un second bit dans le second registre à décalage pour générer un bit de correspondance.

9. Appareil (110, 800) selon la revendication 8, la mémoire lisible par ordinateur (820) comprenant des instructions (821) qui, lorsqu'elles sont exécutées par le processeur (802), amènent le processeur à :
appliquer (330) au moins l'une d'une opération logique NOR exclusive (214) ou d'une opération logique OU exclusive (214) entre un premier bit du premier registre à décalage (212) et un second bit du second registre à décalage (222) pour générer un bit de correspondance.

10. Appareil (110, 800) selon l'une quelconque des revendications 8 et 9, la mémoire lisible par ordinateur (820) comprenant des instructions (821) qui, lorsqu'elles sont exécutées par le processeur (802), amènent le processeur à :
faire fonctionner le premier registre à décalage (212) à une première fréquence d'horloge ; et
faire fonctionner le second registre à décalage (222) à une seconde fréquence d'horloge, différente de la première fréquence d'horloge.

11. Appareil (110, 800) selon l'une quelconque des revendications 8 à 10, la mémoire lisible par ordinateur (820) comprenant des instructions (821) qui, lorsqu'elles sont exécutées par le processeur (802), amènent le processeur à :
sélectionner, dans le premier registre à décalage (212), le premier bit à comparer au second bit ; et
calculer, à partir d'au moins un bit suivant de la première chaîne de bits (210), un nombre de bits de la première chaîne de bits à sauter avant de comparer un second bit du premier registre à décalage à un second bit du second registre à décalage (222).

12. Appareil (110, 800) selon l'une quelconque des revendications 8 à 11, la mémoire lisible par ordinateur (820) comprenant des instructions (821) qui, lorsqu'elles sont exécutées par le processeur (802), amènent le processeur à :
appliquer (340) une opération logique de verrouillage entre un premier bit du premier registre à décalage (212) et un second bit du second registre à décalage (222) pour générer une copie de la clé de chiffrement (220).
